# EUROPEAN PATENT SPECIFICATION

(11) **EP 1 613 164 B1**
(45) Date of publication and mention of the grant of the patent: **30.12.2015**
(21) Application number: 03816830.8
(22) Date of filing: 30.09.2003
(51) Int. Cl.: A22B 3/02

(54) **CONCUSSION STUNNER**
ERSCHÜTTERUNGSBETÄUBER
ETOURDISSEMENT PAR COMMOTION

(30) Priority: 17.04.2003 US 417865
(43) Date of publication of application: 11.01.2006
(73) Proprietor: JARVIS PRODUCTS CORPORATION, Middletown, CT 06457 (US)
(72) Inventor: JONES, Arthur, Tabor, IA 51653 (US)
(74) Representative: Lamb, Martin John Carstairs
(86) International application number: PCT/US2003/031031
(87) International publication number: WO 2004/095934

(56) References cited:
- GB-A- 2 143 717
- US-A- 3 040 711
- US-A- 3 389 425
- US-A- 4 757 627
- US-A- 5 692 951
- US-A- 6 135 871

## Description

### Technical Field

The present invention relates to animal stunners used in meat processing operations. More specifically the present invention relates to animal stunners that stun the animal by concussion instead of penetration.

### Description of Related Art

In livestock and meat processing operations incoming animals are first disabled with a stunner. An early method of stunning used a heavy stunning hammer swung by hand. A stunning hammer achieves its effect by concussion without penetrating the skull. However, a stunning hammer is heavy and must be swung over a relatively long stroke to achieve the required energy needed to produce concussion. Such a tool is tiring to wield and is relatively slow. Consequently, it is unsuitable for most modern meat processing operations.

Modern animal stunners use a penetrating rod that is pneumatically- driven into the skull of the animal. Animal stunners of this type achieve the stunning effect by penetration and mechanical disruption of the nervous system, not by concussion. Although penetrating rod designs have proven to be very effective, they cannot be used in slaughtering operations where civil or religious rules prohibit penetration of the animal's skull. Even where such rules do not apply, there is a growing concern over potential disease contamination during any meat processing operation that penetrates or exposes any portion of the animal's nervous system.

Heretofore, it has generally been believed that a concussion-type non-penetrating stunner must have characteristics similar to a hammer to achieve the concussion required to properly stun the animal without penetration. Such a tool would incorporate a heavy stunning head that would be accelerated over a relatively long distance and have a large stunning surface. These characteristics have been believed to be incompatible with modern penetrating rod designs and the requirements of high speed meat processing operations. An example of a pneumatic non-penetrating stunner is known from US 3 040 711.

To properly stun an animal by concussion, the stunning head (and attached moving components) must be accelerated to speed and thereby given sufficient kinetic energy (stunning energy) to provide the necessary concussion at impact. With limitations on available pneumatic pressures, a heavy stunning head (comparable to a hammer), would have to be driven over a relatively long distance or be provided with a very large diameter driving piston to achieve the necessary stunning energy. This would result in an objectionably bulky and heavy tool.

It has been found that, contrary to general belief, a concussion stunner can be constructed with a very light stunning head. The lighter the stunning head, the higher the speed that the head can be given with available pneumatic pressure. When the speed of the head is doubled, for a fixed head weight, the stunning energy is increased by a factor of four. For a concussion stunner to be of a manageable size, and commercially successful, it must be no larger than existing penetrating rod stunners and must run on available pneumatic pressure.

This size and pressure restriction limits the force that can be applied to accelerate the stunning head and the distance over which that force can be applied, thereby limiting the speed of the head according to the mass of the head. As the mass of the head decreases, the speed increases in approximately inverse proportion. Because the kinetic energy of the head is dependent upon its speed squared times its mass, the net effect of increasing speed and decreasing mass proportionally is to increase the stunning energy and increase the concussion that the tool can produce. Thus it has been found that it is preferred to minimize the weight of the stunning head (and attached moving components) in a concussion stunner to maximize the stunning energy.

To avoid penetration, a concussion stunner must have a relatively larger stunning head than a penetrating rod design. However, this diameter increase causes several problems when attempting to decrease the mass and increase the speed of the stunning head. One problem is that the large diameter of the head tends to increase its mass. This has a detrimental effect on tool operation by slowing the speed of the head. The stunning head must be carefully designed for low mass and high strength if the required stunning energy is to be achieved within the size and pressure limitations.

A second problem involves the extension distance of the stunning head from the tool and the high stunning energy given to the head. Because the stunning head is not permitted to penetrate the animal, the distance it extends beyond the tool must be more limited than in a penetrating bolt design. If the tool is not in close contact with the animal before it is triggered, the high energy given to the stunning head will be transferred to the tool. This can damage the tool if it occurs repeatedly. Because occasional firing without animal contact cannot be completely avoided, an improved energy absorption system must be used inside the tool to stop the stunning head and absorb the stunning energy.

The limited extension distance of the stunning head makes it even more important that there be an actuator at the front of the tool that acts as an interlock to prevent the tool from being triggered until the head of the tool is actually in close contact with the animal. United States Patent No. 6,135,871 discloses an actuator for a penetrating rod stunner design comprising an axially sliding cylinder that surrounds the penetrating rod and extends beyond the rod when the rod is retracted. An actuator that surrounds the impact area is advantageous because it places the sensing end of the actuator as close as it is possible to get to the impact area.

However, adapting such an optimal actuator design to a large diameter lightweight stunning head design has proven to be unexpectedly difficult. One difficulty relates to the air located ahead of the large diameter stunning head inside the actuator. When the open front end of the cylindrical actuator is placed against the animal, air is trapped inside the cylindrical actuator between the stunning head and the end placed into contact with the animal. The large diameter of the concussion stunning head means there is a relatively large volume of air in front of the stunning head, as compared to a penetrating rod design. This increased volume of air will produce a pressure buildup if it is not allowed to escape rapidly as the stunning head is driven towards the animal. The light weight of the stunning head means that such a pressure buildup can have a disproportionately large effect and slow the stunning head to below the required minimum stunning energy.

Controlling the extension distance of the stunning head beyond the front of the tool is yet another difficulty found in a concussion-based design that is not found in a penetrating rod design. In a concussion stunner, the stunning head must not penetrate the animal, and yet must impact the animal with sufficient force to produce the necessary concussion.

Bearing in mind the problems and deficiencies of the prior art, it is therefore an object of the present invention to provide a pneumatic animal stunner for stunning an animal by concussion that is of comparable weight and size to penetrating rod stunners and which is capable of operating with comparable pneumatic pressure and flow rates.

Still other objects and advantages of the invention will in part be obvious and will in part be apparent from the specification.

### Disclosure of Invention

The above and other objects, which will be apparent to those skilled in art, are achieved in the present invention. The present invention provides a pneumatic animal stunner for stunning an animal by concussion according to claim 1 comprising:
a housing having a front end and an inner chamber;
an activator mounted to the front end of the housing;
a piston movably mounted within the inner chamber of the housing, the piston and the inner chamber of the housing defining a pressure chamber;
a stunning rod driven by the piston towards the front end of the housing, the stunning rod having a sufficiently large diameter to prevent penetration of the animal;
a catch mounted within the housing and adapted to releasably hold the piston in a retracted position; and
a trigger adapted to control a flow of pressurized fluid from a source of pressurized fluid to the pressure chamber and apply a force to the piston;
the activator being operatively connected to the catch to cause the catch to release the piston and allow the piston to drive the stunning rod toward the front end of the housing when the activator is in contact with the animal;
the stunning rod having a restricted extension distance relative to the front end of the housing to prevent penetration of the animal. The concussion stunner includes a piston preferably sliding within a cylinder inside the stunner housing. The pressurized fluid, is preferably air.

The stunning rod and piston should have a sufficiently light combined weight relative to the force exerted on the piston by the pressurized fluid that the stunning rod achieves at least a minimum stunning speed and stunning energy to stun the animal by concussion, without penetration, when the stunning rod is driven maximally towards the front end of the housing by the pressurized fluid.

The piston of the concussion stunner is preferably integrated into a single piece with the stunning rod and the impact head and catch end are attached thereto. This allows the piston and stunning rod to be made of a lighter material than the impact head and catch end. The stunning rod, catch end and impact head are all preferably hollow to reduce weight. Because the catch end and impact head are removable, they can be made of different materials than the stunning rod. Specifically, the catch end can be made of a more wear resistant material and the impact head can be more impact resistant.

Another aspect of the invention is the restricted extension distance of the stunning rod, which is preferably adjustable. Still another preferred aspect of the invention is the design of the bumper unit used to stop forward motion of the stunning rod and absorb the stunning energy when the tool is not in close contact with the animal.

The bumper is preferably shaped to allow air to flow adjacent to an inrter surface of the bumper to increase heat transfer away from the bumper. In the preferred design, this feature is provided by constructing the bumper of at least two pieces.

A further preferred aspect of the invention is that the activator is designed as an axially sliding sleeve that surrounds the stunning rod and includes one or more openings for venting air ahead of the stunning rod. This venting prevents the buildup of pressure ahead of the stunning rod, which tends to slow it and decrease the stunning energy. It also prevents air from being forced into the animal's skull by the stunning rod.

A second trigger is optionally used which operates a corresponding trigger valve located between the activator and the catch. The second trigger actuates the corresponding trigger valve to release the catch.

Still another preferred aspect of the invention is the provision of an anti-friction coating on the inner surface of the cylinder. The anti-friction coating acts to increase stunning rod speed by minimizing friction between the cylinder and the piston as the piston drives the stunning rod.

An additional preferred aspect of the invention intended to improve stunning rod speed is a low-friction pivoting latch mechanism formed as a plurality of pivoted catch fingers. The catch fingers quickly and completely release the piston as they pivot to an open position.

### Brief Description of the Drawings

The features of the invention believed to be novel and the elements characteristic of the invention are set forth with particularity in the appended claims. The figures are for illustration purposes only and are not drawn to scale. The invention itself, however, both as to organization and method of operation, may best be understood by reference to the detailed description which follows taken in conjunction with the accompanying drawings in which:
Fig. 1 is a cross sectional view of a concussion stunner according to the present invention.
Fig. 2 is a detail view in cross section showing the catch mechanism of the concussion stunner in Fig. 1. The catch mechanism is shown in the closed position as in Fig. 1, with the catch mechanism engaging the catch end of the stunning rod. Obstructing components have been removed in this illustration so that the catch mechanism can be seen more clearly.
Fig. 3 is another detail view in cross section showing the same catch mechanism, illustrated in Fig. 2. In this view, however, the catch mechanism is shown in the open position after the catch end of the stunning rod has been released.
Fig. 4 is a detail view in cross section showing a second trigger and valve assembly.

### Mode(s) for Carrying Out Invention

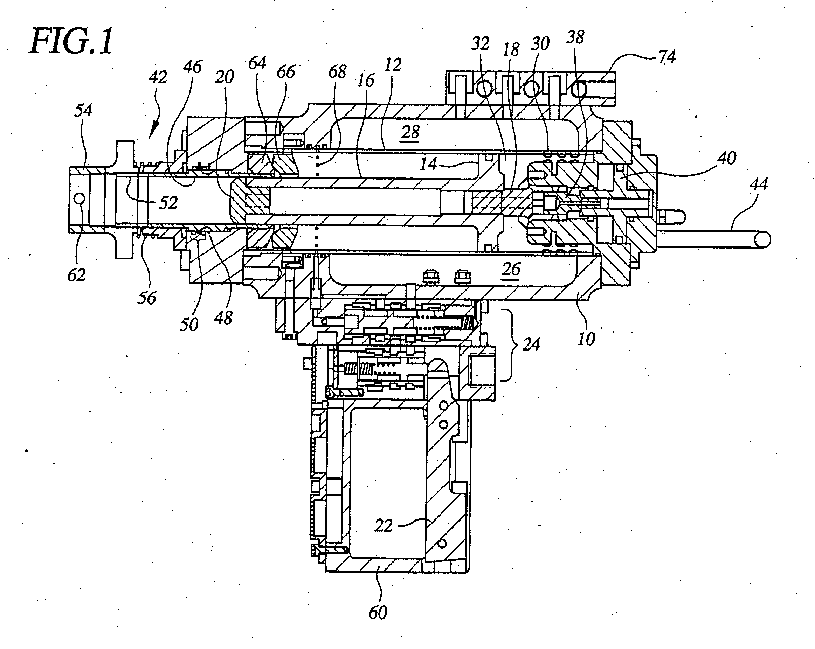

In describing the preferred embodiment of the present invention, reference will be made herein to Figs. 1-4 of the drawings in which like numerals refer to like features of the invention.

Referring to Fig. 1; the concussion stunner of the present invention includes a housing 10 having a cylinder 12 located inside and a piston 14 that slide within the cylinder. The piston 14 is preferably integrally formed as part of a stunning rod 16 having a catch end 18 and an impact head 20. The integrated piston 14 and stunning rod 16 are preferably constructed of a lightweight material, such as aluminum, to minimize weight.

The catch end 18 is preferably formed of a wear-resistant material, such as steel. An impact resistant material is used for the impact head 20. Tool steel, stainless steel and similar materials are suitable for the impact head 20 and the catch end 18. If desired, the catch end and the impact head can be removed. This allows these pieces to be replaced if they become worn, or if it is desired to change the shape of the impact head.

A first trigger 22 is used to control a valve system 24 to supply pressurized fluid, preferably compressed air, to a pressure chamber formed inside the housing 10. The pressure chamber comprises the regions indicated with reference numbers 26 and 28 which surround the exterior of the cylinder 12, as well as the interior region 32 of the cylinder 12 located behind the piston 14. Compressed air can move freely and quickly from regions 26 and 28 through openings 30 and into the region 32 behind the piston 14 to apply a pressure on the back side of the piston urging it towards the front of the tool.

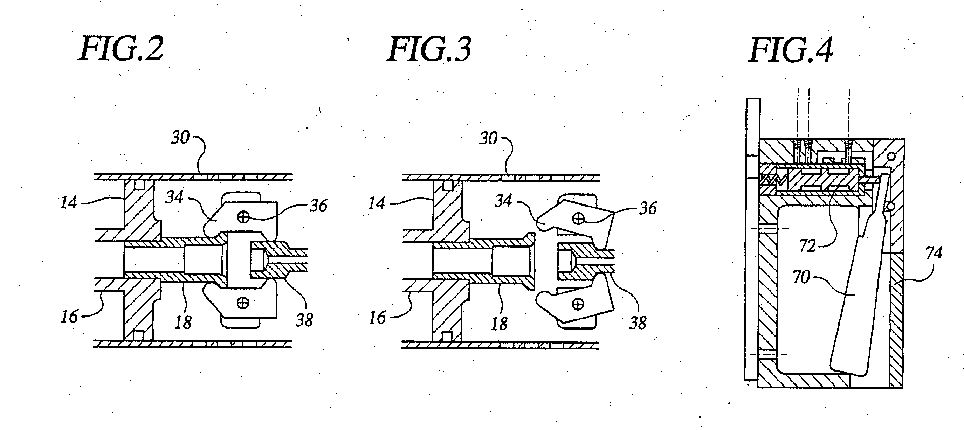

Trigger 22 is used to prepare the concussion stunner for firing by pressurizing the tool, and does not actually release the piston and stunning rod for the stunning stroke. The piston 14 and stunning rod 16 are prevented from moving forward by a catch mechanism illustrated in Figs. 2 and 3. In the preferred design, there are two additional conditions that must be met before the catch mechanism is released. The activator 42 located at the front of the tool must be in contact with the animal to receive the stroke and a second trigger 70 (see Fig. 4) must be manually operated.

The catch end 18 is restrained by a plurality of catch fingers 34 that rotate about corresponding pivots 36. When catch block 38 is in the rearward position, as illustrated in Figs. 1 and 2, the catch fingers are held in the closed position and catch end 18 is restrained. When catch block 38 moves towards the front of the tool, as illustrated in Fig. 3, the reduced diameter of the catch block allows the back end of the catch fingers 34 to move towards each other and the front end of the catch fingers to open. As the catch fingers 34 pivot towards the open position they release catch end 18 and the piston 14 and stunning rod 16 are free to rapidly accelerate towards the front of the tool to deliver the concussion stroke.

The catch block 38 is moved axially by catch piston 40 to engage and release the catch fingers. The catch piston 40 is moved by pneumatic pressure controlled by the activator 42 and the second trigger 70. When the activator 42 is pressed against the animal, pressurized air is directed into a line that passes through a second valve 72 operated by the second trigger 70 (see Fig. 4) and ultimately reaches the backside of catch piston 40. The pressure applied to the back of catch piston 40 drives it towards the front of the tool, thereby moving the catch block 38 forward and releasing the catch fingers.

The second trigger 70 and valve 72 are located in a second trigger housing 74 that may be mounted on the tool housing at any convenient location and connected to the main tool by pneumatic hoses. The tool is normally actuated by first squeezing trigger 22 to supply pressurized air to the back of the piston. The tool is then placed in contact with the animal, which moves the nose activator 42 to the rear. The rearward motion of the activator releases pressurized air to the second trigger and the tool is then ready to be fired. When the operator pulls the second trigger, the catch piston 40 moves forward, the stunning rod is released and the concussion stroke is delivered.

The use of two triggers helps to ensure that the operator's hands are clear of the working end of the tool. A support bar 44 is provided at the back of the tool to provide an adjustable mounting point for suspending and counterbalancing the weight of the tool.

The activator 42 includes an axially sliding piece 46 with pneumatic valve slots 48 formed on its periphery. When the activator 42 slides to the rearward position, slots 48 allow pressurized air to flow through valve openings 50 and ultimately to the second trigger valve 72. The forward end 52 of the activator 46 is externally threaded and engages corresponding internal threads on an adjustment head 54. By rotating the adjustment head 54 on threads 52, the length of the tool and activator 42 can be changed.

By changing the length of the activator 42, the extension distance of the impact head 20 beyond the front of the tool is controlled and limited. This allows additional control over the concussion force delivered to the animal and acts to prevent penetration, thereby ensuring that the animal is stunned solely by concussion. The large diameter of the stunning rod also furthers the goal of stunning without any penetration. Finally, the impact head is shaped to avoid the chance of inadvertent penetration. The impact head should not have any shape that might initiate penetration, such as a sharp end or pointed end. Instead, a flat, slightly rounded or slightly domed end is preferable.

A spring 56 located around the activator, behind the adjustment head 54, continuously urges the sliding activator towards the front of the tool. This prevents the tool from being triggered until the tool is in good contact with the animal.

In order to increase the speed of the stunning rod 16 to the maximum, it is made as light as possible. The stunning rod and piston have a combined weight that is sufficiently low, relative to the force exerted on the piston by the compressed air, that the stunning rod achieves a required minimum stunning speed and stunning energy to stun the animal by concussion, without penetration. In addition to using a relatively light material, such as aluminum, for the stunning rod, it is preferably made hollow. The catch end 18 (see Fig. 2) and the impact head 20 are also preferably hollow.

The design of the present tool which uses a restrained piston driven by a previously charged pressure chamber within the tool avoids the requirement found in some earlier designs for the compressed air to flow through a trigger valve during the stunning stroke. The tool is completely charged prior to being triggered and there is no requirement for compressed air to flow through restrictive small-diameter valve passages during the actual stunning stroke.

In addition to making the piston and stunning rod as light as possible, it is also desirable to minimize friction and other types of resistance to the forward motion of the stunning rod. In this regard, the pivoting catch design is particularly advantageous as it has extremely minimal friction, once released, as compared to the collet-type catch mechanism described United States Patent No. 6,135,871, which shows a penetrating rod stunner. Details concerning the operation of the valve mechanism 24 and the sequencing of pneumatic pressure to retract the piston 14 are also fully described in that patent and are incorporated herein by reference.

Another source of friction, which it is desirable to minimize, is found in the contact between the outer surface of piston 14 and the inner surface of cylinder 12. To minimize this friction, cylinder 12 is preferably given an internal anti-friction coating. To further reduce friction and wear between the rod and the bearings it slides in, the stunning rod, when made of aluminum, is hard anodized.

Yet another source of resistance is caused by air that must be displaced ahead of the moving piston and stunning rod as they accelerate forward. The region ahead of the piston within cylinder 12 and the region ahead of the impact head 20 inside the activator 42 comprise a substantial volume that is filled with air at atmospheric pressure prior to release of the piston. As the piston moves forward, air within these two regions is rapidly displaced.

The region ahead of the cylinder 14 is provided with multiple bore openings 68 that ultimately exhaust air into the front of the handle 60 on which the trigger 22 is mounted. The region in front of the impact head 20 also defines a volume that includes air to be exhausted.

The region in front of the impact head 20 defines a much larger volume, due to the large diameter of the stunning rod, than is found in a penetrating rod design. When the open end of the activator 42 is placed against the animal, it acts to seal the open end of the tool where the impact head 20 emerges. This can cause the volume ahead of the impact head 20 to become pressurized as the stunning stroke is delivered. This pressurization can substantially slow the speed of the light weight piston and reduce the stunning energy of the tool. It may also tend to force air under the animal's skin or into the animal's skull.

Openings 62 in the adjustment head 54 allow air ahead of the impact head 20 to exhaust quickly and efficiently and thereby prevent pressurization ahead of the impact head 20. After the stunning stroke is complete, triggers 22 and 70 are released and air is directed back through the valve system 24 to the region ahead of piston 14 to retract the piston and reset the tool. This reset operation is known and described in United States Patent No. 6,135,871.

By minimizing the weight of the stunning rod (and attached moving components), reducing friction and providing improved exhausting of air ahead of the stunning rod, the concussion stunner in Fig. 1 provides an extremely high stunning energy to the stunning rod to produce the desired concussion in the animal. The design of the activator 42, which completely surrounds the intended impact area, is such that it is difficult to trigger the stunner unless the head 54 is in good contact with the animal.

Nonetheless, the tool will occasionally be triggered without the desired good animal contact. In such an event, stunning rod must be decelerated and the stunning energy of the rod must be safely absorbed within the tool. In prior art penetrating rod stunner designs, a single-piece bumper of a resilient material was used to.absorb the impact of the rod. As the bumper was struck, the stunning energy was delivered to the single piece bumper and converted to heat.

This internal heating due to impact is detrimental to the resilient properties of the material used to make the bumper. Accordingly, in the present invention, the bumper is composed of two elements 64 and 66, which allow air to circulate between them. The front bumper 64 is separated from the rear bumper 66 by an air gap. As the piston 14 moves back and forth in cylinder 16, air is pumped through exhaust holes 68. This circulation of air also moves air between the bumpers and efficiently carries away excess heat from the interior of the bumper unit comprising bumpers 64 and 66.

Although the preferred design uses two separate bumpers, other designs may be used that include more than two bumper elements or which use ribs or formed openings in single piece bumpers. These structures allow air to circulate into the interior region of the bumper unit and carry away excess heat. By increasing the surface area of the bumper unit and allowing air to flow adjacent to inner surfaces of the bumper the lifetime of the bumper can be greatly extended.

The present invention has been particularly described, in conjunction with a specific preferred embodiment, it is evident that many alternatives, modifications and variations will be apparent to those skilled in the art in light of the foregoing description, whithout departing from the scope of the invention as defined in the appended claims.

## Claims

1. A pneumatic animal stunner for stunning an animal by concussion comprising:
a housing (10) having a front end and an inner chamber (26, 28, 32);
an activator (42) mounted to the front end of the housing (10);
a piston (14) movably mounted within the inner chamber of the housing, the piston and the inner chamber of the housing defining a pressure chamber;
a stunning rod (16) driven by the piston towards the front end of the housing, the stunning rod having a sufficiently large diameter to prevent penetration of the animal;
a catch (24) mounted within the housing and adapted to releasably hold the piston in a retracted position; and
a trigger (22) adapted to control a flow of pressurized fluid from a source of pressurized fluid to the pressure chamber and apply a force to the piston;
the stunning rod (16) having a restricted extension distance relative to the front end of the housing to prevent penetration of the animal;
the stunning rod (16) and piston (14) being capable of being accelerated by the force exerted on the piston by the pressurized fluid to stun the animal by concussion, without penetration, when the stunning rod (16) is driven maximally towards the front end of the housing by the pressurized fluid, **characterized in that** the activator (42) is operatively connected to the catch (24) to cause the catch to release the piston (14) and allow the piston to drive the stunning rod (16) toward the front end of the housing when the activator (42) is in contact with the animal;

2. The pneumatic animal stunner according to claim 1 wherein the piston (14) is integrated into a single piece with the stunning rod (15),

3. The pneumatic animal stunner according to claim 2 wherein the integrated piston (14) and stunning rod (16) are provided with a separate impact head (20) and catch end (18), the piston and stunning rod being made of a lighter material than the impact head and catch end.

4. The pneumatic animal stunner according to claim 2 wherein the stunning rod (16) is hollow.

5. The pneumatic animal stunner according to claim 1 wherein the stunning rod (16) is provided with a separate impact head (20), the impact head making contact with the animal during stunning.

6. The pneumatic animal stunner according to claim 5 wherein the impact head is removable and replaceable.

7. The pneumatic animal stunner according to claim 1 wherein the stunning rod (16) is provided with a separate catch end for engagement by the catch (24), the catch end being made of a more wear resistant material than the stunning rod.

8. The pneumatic animal stunner according to claim 1 wherein the restricted extension distance of the stunning rod is adjustable.

9. The pneumatic animal stunner according to claim 8 wherein the activator has an adjustable length, the extension distance of the stunning rod being decreased by increasing the length of the activator.

10. The pneumatic animal stunner according to claim 1 further including a bumper (64, 66) for stopping forward motion of the stunning rod.

11. The pneumatic animal stunner according to claim 10 wherein the bumper includes at least two pieces.

12. The pneumatic animal stunner according to claim 10 wherein the bumper (64, 66) is shaped to allow air to flow adjacent to an inner surface of the bumper to increase heat transfer away from the bumper.

13. The pneumatic animal stunner according to claim 1 wherein the activator comprises an axially sliding sleeve (46) surrounding the stunning rod.

14. The pneumatic animal stunner according to claim 13 wherein the sleeve includes a front end, the front end of the sleeve including at least one opening for venting air ahead of the stunning rod.

15. The pneumatic animal stunner according to claim 13 wherein the sleeve zu includes a movable front end for varying the length of the sleeve and adjusting the extension distance of the stunning rod, the adjustable front end of the sleeve iricluding at least one opening for venting air ahead of the stunning rod.

16. The pneumatic animal stunner according to claim 13 wherein the activator comprises a pneumatic valve and the catch (24) is pneumatically operated by the activator.

17. The pneumatic animal stunner according to claim 16 further including a second trigger (70), and a corresponding trigger valve (72) located between the activator (42) and the catch (24), the second trigger operating the corresponding trigger valve to release the catch.

18. The pneumatic animal stunner according to claim 1 wherein the activator comprises an animal head contactor (54) mounted on the front end of the housing.

19. The pneumatic animal stunner according to claim 18 wherein the catch is operated by the source of pressurized fluid and the animal head contactor is adapted to control the flow of pressurized fluid from the source of pressurized fluid to the catch to release the piston.

20. The pneumatic animal stunner according to claim 1 wherein the stunning rod includes a domed impact head shaped to prevent penetration.

21. The pneumatic animal stunner according to claim 1 wherein the stunning.rod comprises a hollow aluminum shaft and a steel impact head.

22. The pneumatic animal stunner according to claim 1 wherein the piston slides within a cylinder within the housing, and the cylinder is lined with an anti-friction coating.

23. The pneumatic animal stunner according to claim 1 wherein the catch comprises a plurality of pivoted catch fingers.

## Patentansprüche

1. Pneumatisches Tierbetäubungsgerät zum Betäuben eines Tiers durch Erschütterung, das Folgendes umfasst:
ein Gehäuse (10), das ein vorderes Ende und eine innere Kammer (26, 28, 32) hat,
einen Aktivator (42), der an dem vorderen Ende des Gehäuses (10) angebracht ist,
einen Kolben (14), der beweglich innerhalb der inneren Kammer des Gehäuses angebracht ist, wobei der Kolben und die innere Kammer des Gehäuses eine Druckkammer definieren,
einen Betäubungsbolzen (16), der durch den Kolben zum vorderen Ende des Gehäuses hin getrieben wird, wobei der Betäubungsbolzen einen ausreichend großen Durchmesser hat, um ein Eindringen in das Tier zu verhindern,
eine Klinke (24), die innerhalb des Gehäuses angeordnet und dafür eingerichtet ist, den Kolben lösbar in einer eingezogenen Stellung zu halten, und
einen Auslöser (22), der dafür eingerichtet ist, einen Strom eines unter Druck gesetzten Fluids von einer Quelle unter Druck gesetzten Fluids zu der Druckkammer zu regeln und eine Kraft auf den Kolben auszuüben,
wobei der Betäubungsbolzen (16) eine eingeschränkte Ausfahrstrecke im Verhältnis zu dem vorderen Ende des Gehäuses hat, um ein Eindringen in das Tier zu verhindern,
wobei der Betäubungsbolzen (16) und der Kolben (14) dazu in der Lage sind, durch die durch das unter Druck gesetzte Fluid auf den Kolben ausgeübte Kraft beschleunigt zu werden, um das Tier, ohne Eindringen, durch Erschütterung zu betäuben, wenn der Betäubungsbolzen (16) durch das unter Druck gesetzte Fluid maximal zu dem vorderen Ende des Gehäuses getrieben wird, **dadurch gekennzeichnet, dass**
der Aktivator (42) wirksam mit der Klinke (24) verbunden ist, um zu bewirken, dass die Klinke den Kolben (14) freigibt und ermöglicht, dass der Kolben den Betäubungsbolzen (16) zu dem vorderen Ende des Gehäuses hin treibt, wenn sich der Aktivator (42) in Berührung mit dem Tier befindet.

2. Pneumatisches Tierbetäubungsgerät nach Anspruch 1, wobei der Kolben (14) in ein einziges Teil mit dem Betäubungsbolzen (16) integriert ist.

3. Pneumatisches Tierbetäubungsgerät nach Anspruch 2, wobei der integrierte Kolben (14) und der Betäubungsbolzen (16) mit einem gesonderten Schlagkopf (20) und einem Klinkenende (18) versehen sind, wobei der Kolben und der Betäubungsbolzen aus einem leichteren Material hergestellt sind als der Schlagkopf und das Klinkenende.

4. Pneumatisches Tierbetäubungsgerät nach Anspruch 2, wobei der Betäubungsbolzen (16) hohl ist.

5. Pneumatisches Tierbetäubungsgerät nach Anspruch 1, wobei der Betäubungsbolzen (16) mit einem gesonderten Schlagkopf (20) versehen ist, wobei der Schlagkopf während des Betäubens eine Berührung mit dem Tier herstellt.

6. Pneumatisches Tierbetäubungsgerät nach Anspruch 5, wobei der Schlagkopf abnehmbar und austauschbar ist.

7. Pneumatisches Tierbetäubungsgerät nach Anspruch 1, wobei der Betäubungsbolzen (16) mit einem gesonderten Klinkenende für einen Eingriff durch die Klinke (24) versehen ist, wobei das Klinkenende aus einem verschleißfesteren Material hergestellt ist als der Betäubungsbolzen.

8. Pneumatisches Tierbetäubungsgerät nach Anspruch 1, wobei die beschränkte Ausfahrstrecke des Betäubungsbolzens einstellbar ist.

9. Pneumatisches Tierbetäubungsgerät nach Anspruch 8, wobei der Aktivator eine einstellbare Länge hat, wobei die Ausfahrstrecke des Betäubungsbolzens durch ein Steigern der Länge des Aktivators vermindert wird.

10. Pneumatisches Tierbetäubungsgerät nach Anspruch 1, das ferner einen Puffer (64, 66) zum Anhalten einer Vorwärtsbewegung des Betäubungsbolzens umfasst.

11. Pneumatisches Tierbetäubungsgerät nach Anspruch 10, wobei der Puffer wenigstens zwei Teile einschließt.

12. Pneumatisches Tierbetäubungsgerät nach Anspruch 10, wobei der Puffer (64, 66) so geformt ist, dass er ermöglicht, das Luft benachbart einer Innenfläche des Puffers strömt, um die Wärmeübertragung weg von dem Puffer zu steigern.

13. Pneumatisches Tierbetäubungsgerät nach Anspruch 1, wobei der Aktivator eine in Axialrichtung gleitende Hülse (46) umfasst, die den Betäubungsbolzen umgibt.

14. Pneumatisches Tierbetäubungsgerät nach Anspruch 13, wobei die Hülse ein vorderes Ende umfasst, wobei das vordere Ende der Hülse wenigstens eine Öffnung zum Entlüften von Luft vor dem Betäubungsbolzen einschließt.

15. Pneumatisches Tierbetäubungsgerät nach Anspruch 13, wobei die Hülse ein bewegliches vorderes Ende zum Verändern der Länge der Hülse und Einstellen der Ausfahrstrecke des Betäubungsbolzens umfasst, wobei das einstellbare vordere Ende der Hülse wenigstens eine Öffnung zum Entlüften von Luft vor dem Betäubungsbolzen einschließt.

16. Pneumatisches Tierbetäubungsgerät nach Anspruch 13, wobei der Aktivator ein Pneumatikventil umfasst und die Klinke (24) durch den Aktivator pneumatisch betätigt wird.

17. Pneumatisches Tierbetäubungsgerät nach Anspruch 16, das ferner einen zweiten Auslöser (70) und ein entsprechendes Auslöserventil (72), das zwischen dem Aktivator (42) und der Klinke (24) angeordnet ist, umfasst, wobei der zweite Auslöser das entsprechende Auslöserventil betätigt, um die Klinke zu lösen.

18. Pneumatisches Tierbetäubungsgerät nach Anspruch 1, wobei der Aktivator eine Tierkopf-Kontaktvorrichtung (54) umfasst, die an dem vorderen Ende des Gehäuses angebracht ist.

19. Pneumatisches Tierbetäubungsgerät nach Anspruch 18, wobei die Klinke durch die Quelle von unter Druck gesetztem Fluid betätigt wird und die Tierkopf-Kontaktvorrichtung dafür eingerichtet ist, den Strom von unter Druck gesetztem Fluid von der Quelle von unter Druck gesetztem Fluid zu der Klinke zu regeln, um den Kolben freizugeben.

20. Pneumatisches Tierbetäubungsgerät nach Anspruch 1, wobei der Betäubungsbolzen einen gewölbten Schlagkopf einschließt, der dafür geformt ist, ein Eindringen zu verhindern.

21. Pneumatisches Tierbetäubungsgerät nach Anspruch 1, wobei der Betäubungsbolzen einen hohlen Aluminiumschaft und einen Stahlschlagkopf umfasst.

22. Pneumatisches Tierbetäubungsgerät nach Anspruch 1, wobei der Kolben innerhalb eines Zylinders innerhalb des Gehäuses gleitet und der Zylinder mit einer reibungsmindernden Beschichtung ausgekleidet ist.

23. Pneumatisches Tierbetäubungsgerät nach Anspruch 1, wobei die Klinke mehrere schwenkbare Klinkenfinger umfasst.

## Revendications

1. Étourdisseur pneumatique d'animal permettant d'étourdir un animal par commotion, comprenant :
une enveloppe (10) présentant une extrémité avant et une chambre intérieure (26, 28, 32) ;
un activateur (42) monté sur l'extrémité avant de l'enveloppe (10) ;
un piston (14) monté mobile au sein de la chambre intérieure de l'enveloppe, le piston et la chambre intérieure de l'enveloppe définissant une chambre de pression ;
une barre à étourdir (16) entraînée par le piston en direction de l'extrémité avant de l'enveloppe, la barre à étourdir présentant un diamètre suffisamment large pour empêcher une pénétration de l'animal ;
un loquet (24) monté au sein de l'enveloppe et conçu pour retenir de manière libérable le piston dans une position rétractée ; et
un déclencheur (22) conçu pour commander une circulation de fluide sous pression à partir d'une source de fluide sous pression vers la chambre de pression et pour appliquer une force au piston ;
la barre à étourdir (16) présentant une distance d'extension restreinte par rapport à l'extrémité avant de l'enveloppe afin d'empêcher une pénétration de l'animal ;
la barre à étourdir (16) et le piston (14) étant susceptibles d'être accélérés par la force exercée sur le piston par le fluide sous pression afin d'étourdir l'animal par commotion, sans pénétration, lorsque la barre à étourdir (16) est entraînée de manière maximale en direction de l'extrémité avant de l'enveloppe par le fluide sous pression, **caractérisé en ce que**
l'activateur (42) est raccordé de manière fonctionnelle au loquet (24) afin d'amener le loquet à libérer le piston (14) et permettre au piston d'entraîner la barre à étourdir (16) en direction de l'extrémité avant de l'enveloppe lorsque l'activateur (42) est en contact avec l'animal.

2. Étourdisseur pneumatique d'animaux selon la revendication 1, dans lequel le piston (14) est réalisé d'un seul tenant avec la barre à étourdir (16).

3. Étourdisseur pneumatique d'animaux selon la revendication 2, dans lequel le piston (14) et la barre à étourdir (16) d'un seul tenant sont munis d'une tête d'impact (20) et d'une extrémité de loquetage (18) séparée, le piston et la barre à étourdir étant réalisés en un matériau plus léger que la tête d'impact et l'extrémité de loquetage.

4. Étourdisseur pneumatique d'animaux selon la revendication 2, dans lequel la barre à étourdir (16) est creuse.

5. Étourdisseur pneumatique d'animaux selon la revendication 1, dans lequel la barre à étourdir (16) est munie d'une tête d'impact (20) séparée, la tête d'impact venant en contact avec l'animal pendant l'étourdissement.

6. Étourdisseur pneumatique d'animaux selon la revendication 5, dans lequel la tête d'impact est amovible et remplaçable.

7. Étourdisseur pneumatique d'animaux selon la revendication 1, dans lequel la barre à étourdir (16) est munie d'une extrémité de loquetage séparée permettant une mise en prise par le loquet (24), l'extrémité de loquetage étant réalisée en un matériau plus résistant à l'usure que la barre à étourdir.

8. Étourdisseur pneumatique d'animaux selon la revendication 1, dans lequel la distance d'extension restreinte de la barre à étourdir peut être ajustée.

9. Étourdisseur pneumatique d'animaux selon la revendication 8, dans lequel l'activateur présente une longueur ajustable, la distance d'extension de la barre à étourdir étant diminuée par une augmentation de la longueur de l'activateur.

10. Étourdisseur pneumatique d'animaux selon la revendication 1, comprenant en outre un butoir (64, 66) permettant d'arrêter un mouvement vers l'avant de la barre à étourdir.

11. Étourdisseur pneumatique d'animaux selon la revendication 10, dans lequel le butoir comprend au moins deux pièces.

12. Étourdisseur pneumatique d'animaux selon la revendication 10, dans lequel le butoir (64, 66) présente une forme permettant à de l'air de circuler à proximité d'une surface intérieure du butoir afin d'augmenter un transfert de chaleur hors du butoir.

13. Étourdisseur pneumatique d'animaux selon la revendication 1, dans lequel l'activateur comprend un manchon (46) axialement coulissant entourant la barre à étourdir.

14. Étourdisseur pneumatique d'animaux selon la revendication 13, dans lequel le manchon comprend une extrémité avant, l'extrémité avant du manchon comprenant au moins une ouverture permettant une mise à l'air à l'avant de la barre à étourdir.

15. Étourdisseur pneumatique d'animaux selon la revendication 13, dans lequel le manchon comprend une extrémité avant mobile permettant de modifier la longueur du manchon et d'ajuster la distance d'extension de la barre à étourdir, l'extrémité avant ajustable du manchon comprenant au moins une ouverture permettant une mise à l'air à l'avant de la barre à étourdir.

16. Étourdisseur pneumatique d'animaux selon la revendication 13, dans lequel l'activateur comprend une soupape pneumatique et le loquet (24) est actionné de manière pneumatique par l'activateur.

17. Étourdisseur pneumatique d'animaux selon la revendication 16, comprenant en outre un second déclencheur (70), et une sounane de déclenchement (72) corresdondante située contre l'activateur (42) et le loquet (24), le second déclencheur actionnant la soupape de déclenchement correspondante pour libérer le loquet.

18. Étourdisseur pneumatique d'animaux selon la revendication 1, dans lequel l'activateur comprend un heurtoir de tête d'animal (54) monté sur l'extrémité avant de l'enveloppe.

19. Étourdisseur pneumatique d'animaux selon la revendication 18, dans lequel le loquet est actionné par la source de fluide sous pression et le heurtoir de tête d'animal est conçu pour commander la circulation du fluide sous pression de la source de fluide sous pression vers le loquet afin de libérer le piston.

20. Étourdisseur pneumatique d'animaux selon la revendication 1, dans lequel la barre à étourdir comprend une tête d'impact en forme de dôme dont la forme permet d'empêcher une pénétration.

21. Étourdisseur pneumatique d'animaux selon la revendication 1, dans lequel la barre à étourdir comprend une tige en aluminium creux et une tête d'impact en acier.

22. Étourdisseur pneumatique d'animaux selon la revendication 1, dans lequel le piston coulisse au sein d'un cylindre au sein de l'enveloppe, et le cylindre est revêtu d'un revêtement antifriction.

23. Étourdisseur pneumatique d'animaux selon la revendication 1, dans lequel le loquet comprend une pluralité de doigts de loquetage pivotés.
